# EUROPÄISCHE PATENTSCHRIFT

(11) **EP 1 232 441 B1**
(45) Veröffentlichungstag und Bekanntmachung des Hinweises auf die Patenterteilung: **04.06.2003**
(21) Anmeldenummer: 00988579.9
(22) Anmeldetag: 10.11.2000
(51) Int. Cl.: G06F 13/00

(54) **VERFAHREN ZUM DATENAUSTAUSCH BEI EINEM MEHRPROZESSORSYSTEM**
DATA EXCHANGE METHOD IN A MULTI-PROCESSOR SYSTEM
PROCEDE POUR ECHANGER DES DONNEES DANS UN SYSTEME MULTIPROCESSEUR

(30) Priorität: 16.11.1999 DE 19955092
(43) Veröffentlichungstag der Anmeldung: 21.08.2002
(73) Patentinhaber: SIEMENS AKTIENGESELLSCHAFT, 80333 München (DE)
(72) Erfinder: VOGT, Thomas, 93049 Regensburg (DE); QUEISSER, Frank, 93055 Regensburg (DE); ROSE, Claus, 93096 Köfering (DE)
(86) Internationale Anmeldenummer: DE0003939
(87) Internationale Veröffentlichungsnummer: WO01037100

(56) Entgegenhaltungen:
- EP-A- 0 562 333
- US-A- 4 774 625
- US-A- 5 748 923

## Beschreibung

Die Erfindung betrifft ein Verfahren zum Datenaustausch bei einem Mehrprozessorsystem, das einen Oberprozessor und mindestens einen Unterprozessor aufweist, die über einen Systembus miteinander kommunizieren, wobei das Mehrprozessorsystem über eine Schnittstelle zum Oberprozessor zum Datenaustausch mit einem externen System in der Lage ist. Der Unterprozessor führt Regelaufgaben an einer Anlage durch.

Ein solches Mehrprozessorsystem wird häufig bei Kraftfahrzeugen verwendet, um diverse Regel- und Steueraufgaben mit einem als Mehrprozessorsystem ausgebildeten Steuergerät zu bewerkstelligen. Das Mehrprozessorsystem hat vorgegebene Applikationsdaten, auf die während des Betriebes zugegriffen wird, und Betriebsdaten, die systemintern bearbeitet werden und sich je nach Betriebszustand der gesteuerten Anlage, beispielsweise des Fahrzeuges, ändern.

Bei der Auslegung eines solchen Mehrprozessorsystems muß man den Datensatz mit Applikationsdaten geeignet wählen. Dies wird als "Applikation" bezeichnet. Dabei werden die später konstanten Applikationsdaten im Speicher des Mehrprozessorsystems verändert und die Reaktionen beobachtet, um eine Optimierung durchführen zu können. Ein Beispiel Applikationsdatum für eine Brennkraftmaschine steuerndes Mehrprozessorsystem ist der bei einem bestimmten Lastpunkt zu wählende Zündwinkel.

Mehrprozessorsysteme haben nun in der Applikation den Nachteil, daß der Anwender die einzelen Prozessoren verwalten muß.

Dies setzt Kenntnis über die interne Aufteilung der Algorithmen und Daten im Mehrprozessorsystem voraus.

Aus EP 0 562 333 A2 ist ein Kommunikationsnetzwerk bekannt, bei dem ein zentraler Steuerknoten und verteilte Steuerknoten miteinander kommunizieren. Das Netzwerk ist mit einem seriellen Bus ausgelegt und spricht die verteilten Steuerknoten periodisch nach einer vorbestimmten Anzahl von Zeittakten an. Zur Festlegung der Reihenfolge wird jedem Steuerknoten eine Ordnungszahl zugeordnet.

Man möchte nun in der Lage sein, ein Mehrprozessorsystem bei der Vorgabe von Applikationsdaten während der Applikation als Einheit zu betrachten, und die einzelnen Prozessoren des Systems nicht getrennt verwalten müssen.

Es ist deshalb Aufgabe der vorliegenden Erfindung, ein Verfahren zum Datenaustausch für ein Mehrprozessorsystem anzugeben, bei dem der Anwender keine Kenntnis von der internen Struktur des Mehrprozessorsystems haben muß, wenn er diese zum Datenaustausch mit einem externen System, beispielsweise während der Applikation, anspricht.

Diese Aufgabe wird durch die in Anspruch 1 gekennzeichnete Erfindung gelöst.

Erfindungsgemäß ist systemintern eine Standardbotschaft zur Kommunikation vorgesehen, die abwärtsgerichtet, d.h. vom Oberprozessor zum Unterprozessor, oder aufwärtsgerichtet, d.h. vom Unterprozessor zum Oberprozessor, sein kann. Jede Standardbotschaft wird über den Systembus geschickt und besteht aus mehreren Datenblöcken. Abwärts-Standardbotschaften bestehen mindestens aus einem den adressierten Unterprozessor kennzeichnenden Adreßblock, einem Zählerblock, der die Nummer eines später folgenden Applikationsdatenblocks kennzeichnet, mindestens einem Betriebsdatenblock, der für den aktuellen Betrieb des Unterprozessors relevante Betriebsdaten enthält und mindestens einem Applikationsdatenblock. Dieser Applikationsdatenblock kann während der Applikation des Systems, d.h. während der Anwender bei der Auslegung an einem externen Applikationssystem die später konstanten Applikationsdaten vorgibt, bei jeder Abwärtsübertragung andere Applikationsdaten enthalten. Alternativ kann im Applikationsdatenblock auch ein Abfragebefehl übermittelt werden, der das Mehrprozessorsystem anweist, den aktuellen Wert eines bestimmten Betriebsdatums zu übermitteln. Das Mehrprozessorsystem setzt dann den Abfragebefehl in der nächsten Abwärts-Standardbotschaft an den adressierten Unterprozessor ein, der daraufhin den aktuellen Wert an den Oberprozessor übermittelt, von wo er an das Applikationssystem gesendet wird. Für eine solche Übermittlung vom Unterprozessor zum Oberprozessor werden Aufwärts-Standardbotschaften verwendet, die in einer Rückkommunikation zu den Abwärts-Standardbotschaften geschickt werden können und ebenfalls aus mehreren Datenblöcken aufgebaut sind. Eine Aufwärts-Standardbotschaft besteht mindestens aus einem Betriebsdatenblock und einem Anzeigedatenblock, der das mit dem Abfragebefehl abgefragte Datum enthält.

Durch diese im Mehrprozessorsystem ablaufende Kombination von Abwärts- und Aufwärts-Standardbotschaften, von der der Anwender nichts wissen muß, kann der Anwender die Reaktion bei der Vorgabe von Applikationsdaten überwachen, indem er geeignete Abfragebefehle an den Oberprozessor absetzt und sich von ihm erforderliche Daten anzeigen läßt.

Durch dieses Verfahren wird erreicht, daß der Anwender sich nicht um die interne algorithmische Aufteilung im Mehrprozessorsystem kümmern muß, sondern lediglich mit dem Oberprozessor kommuniziert und von diesem die gewünschten Daten zurückerhält. Er kann somit das Mehrprozessorsystem als eine Einheit betrachten.

In einer vorteilhaften Weiterbildung haben die Unterprozessoren keinen nicht-flüchtigen Speicher. Dann muß zum Start des Mehrprozessorsystems der erforderliche Satz an Applikationsdaten vom Oberprozessor an die Unterprozessoren übertragen werden. Dies geschieht mittels sogenannter Initialisierungsbotschaften, die ebenfalls wie Standardbotschaften aus Datenblöcken aufgebaut sind, die unter anderem einen die Botschaft als Initialisierungsbotschaft kennzeichnenden Identifikationsblock und mindestens einen Applikationsdatenblock umfassen, der die für den weiteren Betrieb nötigen vorgegebenen Applikationsdaten zumindest teilweise enthält. Ist die Anzahl der Applikationsdaten so groß, daß sie nicht mit einer Initialisierungsbotschaft übertragen werden kann, können auch mehrere Initialisierungsbotschaften vorgesehen werden, auf die die nötigen Applikationsdaten verteilt werden. Bei dieser vorteilhaften Ausgestaltung ist auch den Standardbotschaften ein Identifikationsblock vorgeschaltet, der sie als Standardbotschaften kennzeichnet.

Vorteilhafterweise wird weiter am Ende jeder Botschaft ein Prüfblock angefügt, der die Überprüfung auf korrekte Übertragung ermöglicht.

Einen besonders vorteilhaften Einsatz findet die Erfindung bei der Steuerung eines elektromechanisch betätigten Ventiltriebs mittels eines Mehrprozessorsystems. Es handelt sich dabei um ein Beispiel eines Mehrprozessorsystems im Fahrzeugeinsatz bei geringen zu übertragenden Datenmengen. Bei diesem Mehrprozessorsystem besteht eine interne Busverbindung, beispielsweise durch einen SPI-Bus zwischen dem Oberprozessor, der ein Kommunikationsrechner ist, und den Unterprozessoren, die beispielsweise aus Aufsetzregler die einzelnen elektromechanisch betätigten Gaswechselventile ansprechen. Der Kommunikationsrechner wird von außen üblicherweise über einen CAN-Bus angesprochen. Über diesen Bus erfolgt während der Applikation die Verbindung zwischen Applikationssystem und dem Kommunikationsrechner. Der Vorteil des erfindungsgemäßen Verfahrens liegt dann unter anderem darin, daß nicht jeder Aufsetzrechner einen Anschluß an den CAN-Bus benötigt, und daß die Applikation durch einfache Ansprache des Kommunkationsrechners über den CAN-Bus erfolgen kann. Dabei wird die standardmäßig vorhandene Kommunikation zwischen den Rechnern des Mehrprozessorsystems durch das erfindungsgemäße Verfahren in ihrer Funktionalität so erweitert, daß eine vereinfachte Applikation möglich ist. Durch den in jeder Botschaft vorgesehenen Zählerblock können Applikationsdatensätze übertragen und verwaltet werden, die größer sind, als die Länge einer Botschaft.

Die Weiterbildung mittels Initialisierungsbotschaften beschleunigt dabei den Start des Mehrprozessorsystems durch die schnelle und kompakte Übertragung der erforderlichen Applikationsdaten.

Vorteilhafte Ausgestaltungen der Erfindung sind in den Unteransprüchen gekennzeichnet.

Die Erfindung wird nachfolgend unter Bezugnahme auf die Zeichnung in einem Ausführungsbeispiel näher erläutert. In der Zeichnung zeigt:
Fig. 1 ein Blockschaltbild eines Mehrprozessorsystems mit Anschluß an ein Applikationssystem,
Fig. 2 eine schematische Darstellung einer Abwärts-Standardbotschaft,
Fig. 3 eine schematische Darstellung einer Initialisierungsbotschaft,
Fig. 4 eine schematische Darstellung einer Aufwärts-Standardbotschaft,
Fig. 5 und 6 Blockschaltbilder des Mehrprozessorsystems während der Applikation über ein Applikationssystem und
Fig. 7 eine schematische Darstellung der Ansteuerschaltung für elektromechanisch betätigte Gaswechselventile einer Vier-Zylinder-Brennkraftmaschine.

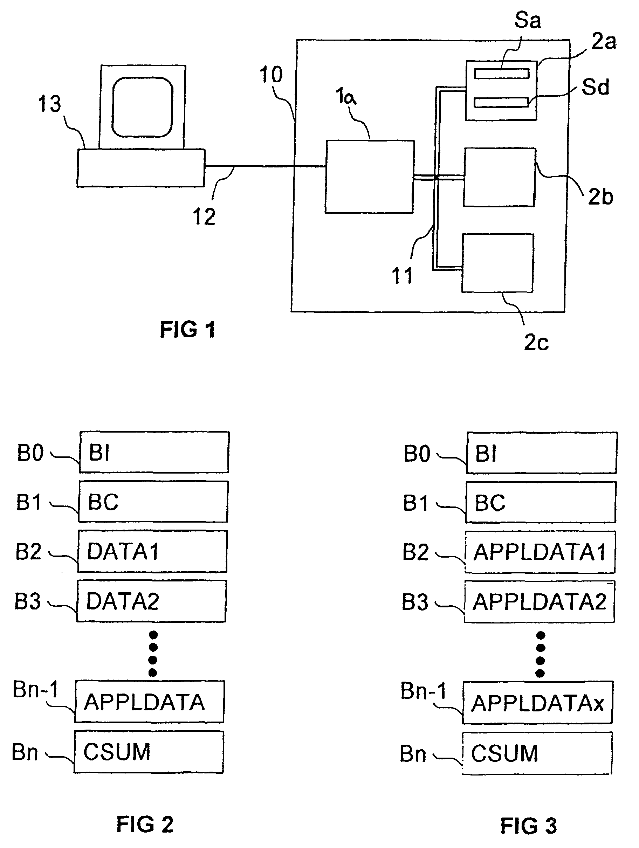

In Fig. 1 ist ein Mehrprozessorsystem schematisch dargestellt. Es besteht aus einem Oberprozessor 1a und mehreren Unterprozessoren. In diesem Beispiel handelt es sich um drei Unterprozessoren 2a, 2b und 2c. Oberprozessor 1a und Unterprozessoren 2a, 2b und 2c sind über einen systeminternen Bus 11 miteinander verbunden. Das gesamte Mehrprozessorsystem 10 ist über eine externe Verbindung 12 mit einem Applikationssystem 13 verbindbar.

Der Oberprozessor 1a kommuniziert mit den Unterprozessoren 2a, 2b, 2c über den systeminternen Bus 11. Die Unterprozessoren 2a, 2b, 2c führen beispielsweise eine Regelaufgabe an einer Anlage durch. Für diese Regelaufgabe benötigen sie Applikationsdaten. Dabei handelt es sich um fest vorgegebene Daten, die beispielsweise die Reaktion des Unterprozessors auf einem bestimmten Betriebszustand wiedergeben. Weiter bearbeitet jeder Unterprozessor 2a, 2b, 2c sogenannte Betriebsdaten, die sich während des Betriebs des Mehrprozessorsystems 10 ändern können. Bei einem solchen Betriebsdatum kann es sich beispielsweise um eine Meßgröße einer gesteuerten Anlage handeln. Jeder Unterprozessor 2a, 2b, 2c hat Speicherzellen Sa und Sd, in denen die Applikationsdaten bzw. die Betriebsdaten abgelegt sind. Zur Vereinfachung sind in Fig. 1 nur eine Speicherzelle Sa und eine Speicherzelle Sd und auch diese nur für den Unterprozessor 2a dargestellt. Realiter ist natürlich eine Vielzahl von Speicherzellen in jedem Unterprozessor vorhanden.

Bei der Applikation des Mehrprozessorsystems möchte man nun vom Applikationssystem 13 über die externe Verbindung 12 einen Applikationsdatensatz vorgeben und die Reaktion bei Wahl dieses Applikationsdatensatzes zur Optimierung des Applikationsdatensatzes beobachten. Der Anwender nimmt am Applikationssystem 13 geeignete Eingaben vor und beobachtet entsprechende Anzeigen, die das Verhalten des Mehrprozessorsystems bzw der geregelten Anlage, insbesondere der aktuellen Betriebsdaten wiedergeben. In welchen Unterprozessoren 2a, 2b oder 2c diese Betriebsdaten verarbeitet werden weiß der Anwender dabei nicht. Diese Kenntnis hat nur der Oberprozessor 1a.

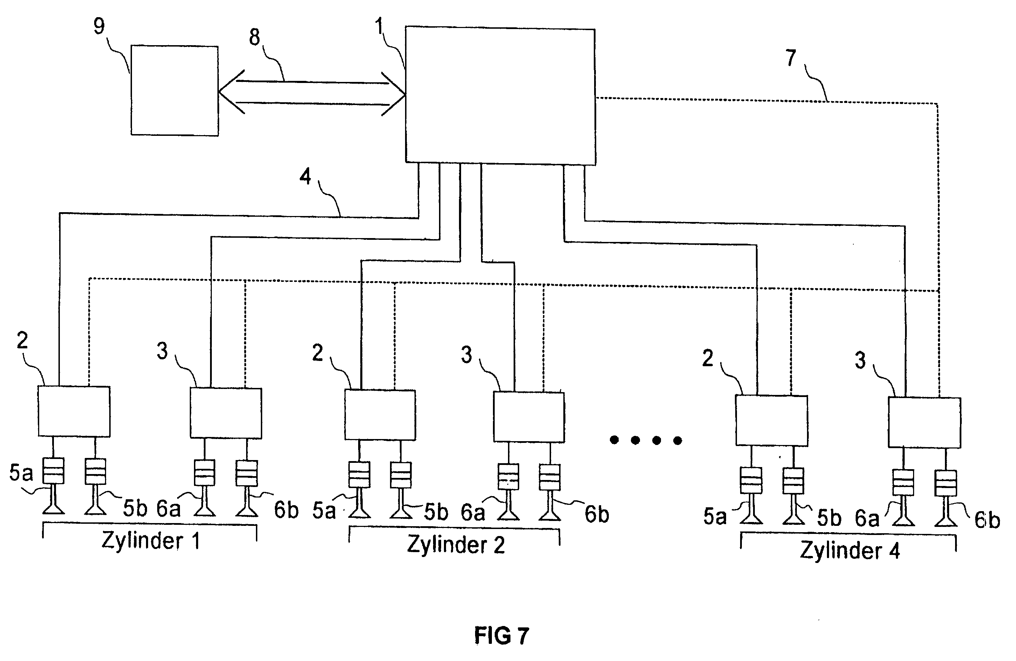

Ein Beispiel für ein solches Mehrprozessorsystem 10, das im folgenden näher beschrieben werden wird, findet man bei der Steuerung elektromagnetischer Gaswechselventile einer Brennkraftmaschine. Ein solches Mehrprozessorsystem ist in Fig. 7 dargestellt.

Die Schaltung der Fig. 7 dient zur Ansteuerung elektromechanisch angetriebener Gaswechselventile 5a, 5b, 6a, 6b. Ein solches elektromechanisch angetriebenes Gaswechselventil ist beispielsweise in dem deutschen Gebrauchsmuster 297 12 502 U1 beschrieben. Für das Verständnis dieser Erfindung ist dabei nur wesentlich; daß das elektromechanisch betätigte Gaswechselventil durch die Bestromung zweier Spulen betätigt wird, wobei eine Spule für das Schließen, die andere für das Öffnen des Gaswechselventils verantwortlich ist.

In Fig. 7 ist schematisch die Schaltung für eine Vier-Zylinder-Brennkraftmaschine dargestellt, jedoch ist diese Zylinderzahl nur beispielhaft zu verstehen. Ein Zylinder hat in diesem Beispiel zwei Einlaßventile 5a, 5b sowie zwei Auslaßventile 6a, 6b. Für die Einlaß- bzw. die Auslaßventile 5a, 5b bzw. 6a, 6b ist jeweils ein eigener Aufsetzregler 2 bzw. 3 vorgesehen. Diese Aufsetzregler sind Unterprozessoren des noch näher zu beschreibenden Mehrprozessorsystems. Der Aufsetzregler 2, 3 steuert Endstufen an, die die Bestromung der jeweiligen Spulen des Gaswechselventils 5a, 5b, 6a, 6b bewerkstelligen. Dabei ist beispielsweise für jede Spule eine eigene Endstufe vorgesehen.

Der Aufsetzregler 2, 3 steuert die Endstufen eines Ventils 5, 6 abhängig von einem Zeitsteuersignal an, das anzeigt, wann das Ventil zu öffnen oder zu schließen hat. Für die Einlaßund die Auslaßventile jedes Zylinders gibt es ein eigenes Zeitsteuersignal.

Das Zeitsteuersignal wird dem Aufsetzregler 2, 3 über eine u-nidirektionale Kommunikationsleitung 4 von einem Kommunikationsrechner 1 zugeführt. Dabei handelt es sich um den Oberprozessor 1a des Mehrprozessorsystems 10. Der Aufsetzregler 2, 3 hat einen digitalen Prozessor, der die Bestromung der Spulen durch die Endstufen so regelt, daß das Ventil 5a, 5b, 6a, 6b in der gewünschten Endstellung sanft aufsetzt.

Der Aufsetzregler 2, 3 ist über eine serielle SPI-Bus Schnittstelle mit dem Kommunikationsrechner 1 verbunden und meldet den Zustand der Ventile 5a, 5b, 6a, 6b bzw. einen eventuellen Ventilausfall über diese Schnittstelle. Die Funktion dieser Schnittstelle wird noch erläutert.

Der Kommunikationsrechner 1 ist an einem CAN-Bus 8 angeschlossen und führt darüber die Kommunikation mit dem Betriebssteuergerät 9 der Brennkraftmaschine durch. Eine solche BUS-Verbindung ist beispielsweise in W. Lawrenz, CAN-Controller Area Network, Hüthig Verlag, 1994, ISBN 3-7785-2263-7 beschrieben.

Der CAN-Bus 8 ist eine beispielhafte Verwirklichung der externen Verbindung 12 zwischen einem Applikationssystem 13 und dem Mehrprozessorsystem 10. Der Kommunikationsrechner 1 ist in diesem Ausführungsbeispiel der Oberprozessor 1a, und die einzelnen Aufsetzregler 2, 3 die Unterprozessoren. Der systeminterne Bus 11 dieses Mehrprozessorsystems 10 ist als SPI-Bus 7 ausgebildet.

Die interne Kommunikation über die SPI-Bus 7 verläuft nun folgendermaßen: Mit dem Start des Mehrprozessorsystems 10 sendet der Kommunkationsrechner 1 selbsttätig Initialisierungsbotschaften an alle Aufsetzregler. Eine solche Initialisierungsbotschaft ist schematisch in Fig. 3 dargestellt. Sie besteht aus unterschiedlichen Blöcken B0 bis Bn. Die Blockgröße beträgt 8 Bit, jedoch ist auch jede beliebig andere Blockgröße denkbar. Allerdings sollte die Blockgröße mindestens die Größe des verwendeten Datentyps aufweisen, damit ein Einzeldatum nicht auf zwei Blöcke aufgeteilt werden muß.

Der erste Block B0 der Initialisierungsbotschaft ist ein Identifikationsblock BI, der die Initialisierungsbotschaft als solche kennzeichnet. Der zweite Block B1 ist ein Zählblock der anweist, wo die folgenden Applikationsdaten in den entsprechenden Speicherzellen Sa des betroffenen Unterprozessors abzulegen sind. Dann folgen mehrere Blöcke B2 bis Bn-1 mit Applikationsdaten APPLDATA1 bis APPLDATAx. Sie werden im Unterprozessor beginnend an der Speicherzelle Sa abgelegt, die vom Zählblock BC bezeichnet wurden. Die Initialisierungsbotschaft wird durch einen Block Bn abgeschlossen, der ein Prüfblock CSUM ist, mittels dem beispielsweise über eine Prüfsumme geprüft werden kann, ob die Initialisierungsbotschaft korrekt erhalten wurde.

Da die Zahl der zu übertragenden Applikationsdaten größer ist, als die Zahl dafür verfügbarer Blöcke B2 bis Bn-1, werden mehrere Initialisierungsbotschaften gesendet. Der Zählblock BC zeigt somit für einen einzelnen Unterprozessor in aufeinanderfolgenden Initialisierungsbotschaften jeweils auf die Speicherzelle Sa, an der abfolgend die danach übermittelten Applikationsdaten APPLDATA1 bis APPLDATAx abzulegen sind. Im Identifikationsblock BI erfolgt zusätzlich noch eine Adressierung des betroffenen Unterprozessors bzw. Aufsetzreglers.

Die Unterprozessoren 2a, 2b, 2c, d.h. die Aufsetzregler 2 und 3 verharren im Initialisierungszustand, bis sie all ihren Applikationsdatensatz vollständig und richtig empfangen haben. Jeder Aufsetzregler 2, 3 überprüft, ob er alle benötigten Applikationsdaten erhalten hat. Fehlt eines, wartet der jeweilige Aufsetzregler, bis er dieses benötigte Applikationsdatum übertragen bekommt. Erst ab diesem Zeitpunkt ist er betriebsbereit. Wie dieses Applikationsdatum übertragen werden kann, wird noch erläutert werden.

Erkennt ein Aufsetzregler anhand des Prüfblockes, daß ein Block oder eine Botschaft fehlerhaft angekommen sein sollte, wird auf noch zu beschreibende Weise dem Kommunikationsrechnern 1 bzw. Oberprozessor 1a mitgeteilt, daß die Daten nicht richtig angekommen sind, und daß eine wiederholte Sendung erforderlich ist. Der Kommunikationsrechner 1 wiederholt dann diese Initialisierungsbotschaft für diesen Unterprozessor, um eine korrekte Übertragung sicherzustellen.

Sind alle Unterprozessoren mit ihren Applikationsdaten versorgt, schaltet das Mehrprozessorsystem auf den Austausch von Standardbotschaften um. Es gibt zwei verschiedene Standardbotschaften: Abwärts-Standardbotschaften, die vom Kommunikationsrechner 1 zum Aufsitzregler 2, 3 gerichtet sind und Aufwärts-Standardbotschaften in der Gegenrichtung. Eine solche Abwärts-Standardbotschaft ist in Fig. 2 schematisch dargestellt. Sie besteht aus mehreren Blöcken B0 bis Bn, deren Datenformat vorzugsweise dem der Blöcke der Initialisierungsbotschaft entspricht. Der erste Block B0 ist wiederum ein Identifikationsblock, der zum einen die Botschaft als Standardbotschaft kennzeichnet und zum anderen den betroffenen Aufsetzregler adressiert. Der darauf folgende Block B1 ist wiederum ein Zählblock BC, dem der adressierte Aufsetzregler entnehmen kann, an welcher Speicherzelle Sa ein später in der Abwärts-Standardbotschaft übertragenes Applikationsdatum einzuordnen ist. An diesen Zählblock BC schließen sich mehrere Betriebsdatenblöcke B2 bis Bn-2 an, die Betriebsdaten DATA1, DATA2 usw. enthalten. Bei diesen Betriebsdaten handelt es ich um betriebsabhängige Parameter, die vom Kommunikationsrechner den Aufsetzreglern mitgeteilt werden, beispielsweise die angeforderte Last der Brennkraftmaschine oder vorgegebene Ventilschaltzeiten. An diese Blöcke schließt sich ein Block Bn-1 an, der ein Applikationsdatum APPLDATA enthält. An welcher Speicherzelle Sa im Aufsetzregler dieses Applikationsdatum einzuordnen ist, kann dem Zählblock BC der Abwärts-Standardbotschaft entnommen werden. Die Abwärts-Standardbotschaft wird mit einem Prüfblock CSUM im letzten Block Bn abgeschlossen.

Diese Abwärts-Standardbotschaft ermöglicht es, Applikationsdaten dem betroffenen Aufsetzregler mitzuteilen. Dies kann in zwei Fällen erforderlich sein: Zum einen teilt der Kommunikationsrechner 1 dem betroffenen Aufsetzregler 2, 3 noch fehlende Applikationsdaten mit, wenn dieser trotz mehrmaligen Initialisierungsbotschaften über eine noch zu beschreibende Aufwärts-Standardbotschaft signalisierte, daß er nicht alle Applikationsdaten erhielt. Zum anderen kann während der Applikation der Anwender dem Kommunikationsrechner 1 neue Applikationsdaten vorgeben. Der Kommunikationsrechner 1 ermittelt dann die betroffenen Aufsetzrgler und teilt ihnen die relevanten neuen Applikationsdaten in mehreren Abwärts-Standardbotschaften mit.

Schließlich kann anstelle des Applikationsdatums APPLDATA in Block Bn-1 einer Abwärts-Standardbotschaft auch ein Auslesebefehl gesendet werden. Dies wird später noch erläutert werden.

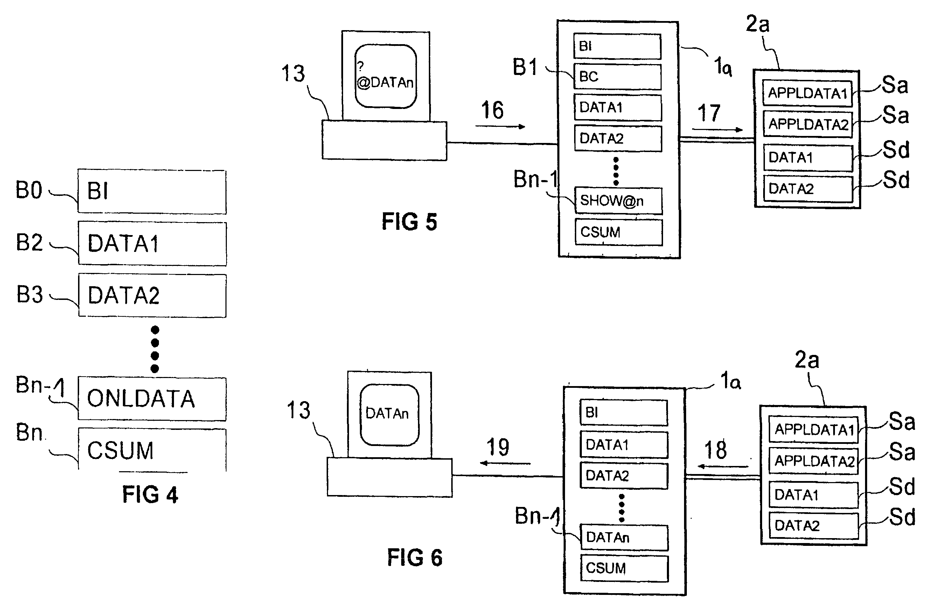

Auf jede Abwärts-Standardbotschaft über den SPI-Bus 7 antwortet der betroffene Aufsetzregler 2, 3 mit einer Aufwärts-Standardbotschaft, die schematisch in Fig. 4 dargestellt ist.

Die Aufwärts-Standardbotschaft beginnt wieder mit einem ersten Block B0, der im Identifikationsblock BI ist. Dieser kennzeichnet die Botschaft als Aufwärts-Standardbotschaft und enthält beispielsweise eine Statusmeldung des jeweiligen Unterprozessors. Daran schließt sich eine Reihe von Blöcken B2, B3, ... an, die Betriebsdaten DATA1, DATA2 des Aufsetzreglers enthalten. Es sei darauf hingewiesen, daß der in den anderen beschriebenen Botschaften vorhandene Zählblock BC sich nicht in den Aufwärts-Standardbotschaften findet. An die Betriebsdaten schließt sich ein Block Bn-1 an, der den aktuellen Wert ONLDATA eines Betriebsdatums anzeigt. Ein Prüfblock CSUM schließt im Block Bn die Aufwärts-Standardbotschaft ab.

Der Block Bn-1 mit dem aktuellen Wert ONLDATA wird zur Applikation des Mehrprozessorsystems wie folgt benutzt.

Zur Applikation ist das Mehrprozessorsystem 10 über eine externe Verbindung 12, in diesem Fall dem CAN-8 mit einem Applikationssystem 13 verbunden. Am Applikationssystem 13 kann, wie erwähnt, der Anwender Daten eingeben und auslesen. Der Anwender geht dabei so vor, daß er einen bestimmten Satz an Applikationsdaten vorgibt, und dann das Verhalten des Mehrprozessorsystems 10 bzw. einer davon geregelten Brennkraftmaschine überwacht. Dazu möchte er gewisse Betriebsdaten angezeigt haben. Um dies zu erreichen, wird nach dem in Fig. 5 dargestellten Schema ein Abfragebefehl für ein Datum DATAn abgesetzt. Dieser wird in Richtung des Pfeiles 16 über den CAN-Bus 8 zum Kommunikationsrechner 1 übertragen. Der Kommunikationsrechner 1 stellt als Oberprozessor 1a daraufhin fest, in welchem der Aufsetzregler bzw. Unterprozessoren dieses Datum vorhanden, bzw. in welcher Speicherzelle Sd es sich dort befindet. In diesem Beispiel sei es der mit 2a bezeichnete Unterprozessor. Der Kommunikationsrechner 1 setzt daraufhin einen Abfragebefehl SHOW@n in die nächste Abwärts-Standardbotschaft zum betroffenen Unterprozessor 2a im Block Bn-1 ein. Diese Botschaft wird in Richtung des Pfeiles 17 über den SPI-Bus 7 an den Unterprozessor 2a übertragen. In der darauffolgenden Rückantwort, die schematisch in Fig. 6 dargestellt ist, überträgt der Unterprozessor 2a in der nun folgenden Aufwärts-Standardbotschaft in Richtung des Pfeiles 18 über den SPI-Bus 7 den Inhalt der abgefragten Speicherzelle als aktuellen Wert ONLDATA. In diesem Fall handelt es sich um den Inhalt DATAn. Der Kommunikationsrechner 1 entnimmt als Oberprozessor 1a nach Empfang dieser Aufwärts-Standardbotschaft diesen Inhalt dem Block Bn-1 und sendet ihn über den CAN-Bus 8 in Richtung des Pfeiles 19 zum Applikationssystem 13, wo er zur Anzeige gebracht wird.

Aus diesem Beispiel ergibt sich, daß der Anwender am Applikationssystem 13 keinerlei Kenntnis von der internen Aufgabenverteilung im Mehrprozessorsystem 10 haben muß. Er muß lediglich mit dem Kommunikationsrechner 1, d.h. dem Oberprozessor 1a entsprechend Daten austauschen und kann das Mehrprozessorsystem 10 als eine Einheit betrachten.

## Patentansprüche

1. Verfahren zum Datenaustausch bei einem Mehrprozessorsystem, das einen Oberprozessor und mindestens einen eine Regelaufgabe an einer Anlage durchführenden Unterprozessor aufweist, wobei Ober- und Unterprozessor über einen Systembus miteinander kommunizieren, und am Oberprozessor eine Schnittstelle zum Datenaustausch mit einem externen System vorgesehen ist, bei welchem Verfahren
a) wiederkehrende Abwärts-Standardbotschaften vom Oberprozessor zum Unterprozessor über den Systembus geschickt werden,
b) auf jede Abwärts-Standardbotschaft der Unterprozessor mit einer Aufwärts-Standardbotschaft vom Unterprozessor zum Oberprozessor antwortet,
- die Abwärts-Standardbotschaften mehrere Datenblöcke mit mindestens
a1) einem den adressierten Unterprozessor kennzeichenden Adreßblock,
a2) einem Zählerblock, der die Nummer eines in der Abwärts-Standardbotschaft folgenden Applikationsdatenblockes bezeichnet,
a3) mindestens einem Betriebsdatenblock, der für den aktuellen Betrieb des Unterprozessors vorgegebene Betriebsdaten enthält, und
a4) mindestens einem Applikationsdatenblock, der für den gesamten Betrieb des Unterprozessors relevante Applikationsdaten enthält, wobei als Applikationsdatum auch ein Abfragebefehl für ein aktuell im Unterprozessor vorhandenes Datum gegeben werden kann, und
- die Aufwärts-Standardbotschaften mehrere Datenblöcke mit
b1) mindestens einem Betriebsdatenblock, der im aktuellen Betrieb des Unterprozessors verwendete Betriebsdaten enthält, und
b2) einem Anzeigedatenblock, der das zuletzt mit einem Abfragebefehl abgefragte Datum enthält,
aufzuweisen,
- wobei der Unterprozessor ein zuletzt mit einer Abwärts-Standardbotschaft abgefragtes Datum so lange wiederholt im Anzeigedatenblock seiner Aufwärts-Standardbotschaft übermittelt, bis ein neues Datum abgefragt wird.

2. Verfahren nach Anspruch 1,
**dadurch gekennzeichnet, daß** vor Schritt a) mit Inbetriebnahme mindestens eine Initialisierungsbotschaft vom Oberprozessor zu jedem Unterprozessor geschickt wird, die aus mehreren Datenblöcken mit mindestens einem Applikationsdatenblock, der für den folgenden Betrieb der Unterprozessoren relevante Applikationsdaten enthält, besteht, und daß jeder Botschaft ein sie als Initialisierungs- oder Standardbotschaft kennzeichnender Identifikationsblock vorangestellt wird, der vorzugsweise auch den Adreßblock beinhaltet.

3. Verfahren nach Anspruch 1 oder 2,
**dadurch gekennzeichnet, daß** bei einem eine Anlage, insbesondere eine Brennkraftmaschine steuernden Mehrprozessorsystem zuerst ein erster Applikationsdatensatz vorgegeben wird, während der Anlagensteuerung über Abwärts-Standardbotschaften Applikationsdaten dieses Datensatzes verändert werden und mittels geeigneter Abfragebefehle in Abwärts-Standardbotschaften die Abfrage von aktuellen Daten bewirkt und deren Anzeige veranlaßt wird, um den Applikationsdatensatz zu optimieren.

4. Verfahren nach einem der vorherigen Ansprüche,
**dadurch gekennzeichnet, daß** der Abfragebefehl eine Speicheradresse im Unterprozessor angibt, an der das abgefragte Datum liegt.

5. Verfahren nach Anspruch 2,
**dadurch gekennzeichnet, daß** der Unterprozessor während der Inbetriebnahme überprüft, ob er mit der mindestens einen Initialisierungsbotschaft alle Applikationsdaten erhalten hat und erst dann mit einer Aufwärts-Standardbotschaft antwortet.

6. Verfahren nach einem der vorherigen Ansprüche,
**dadurch gekennzeichnet, daß** sich an jede Botschaft ein Prüfblock anschließt, der eine Überprüfung der Botschaft auf Übertragungsfehler ermöglicht, und daß der Unterprozessor beim Empfang einer fehlerhaften Botschaft diese verwirft und mit den bislang vorliegenden Applikationsdaten weiterarbeitet, bis er wieder eine gültige Botschaft mit neuen Applikationsdaten empfängt.

## Claims

1. Method for the exchange of data in a multiprocessor system that has a master processor and at least one subprocessor to perform a control task in a system, with the master and subprocessor communicating with each other via a system bus, and an interface for data exchange with an external system being provided on the master processor, by which method
a) recurring downwards standard messages from the master processor to the subprocessor are sent via the system bus,
b) the subprocessor responds to each downwards standard message with an upwards standard message from the subprocessor to the master processor,
- the downwards standard messages have several data blocks with at least
a1) one address block identifying the addressed subprocessor,
a2) a counter block that designates the number of an application data block following in the downwards standard message,
a3) at least one operating data block containing definite operating data for the current operation of the subprocessor, and
a4) at least one application data block containing application data relevant for the complete operation of the subprocessor, with it being possible for a show instruction for data currently present in the subprocessor to be given as application data, and
- the upwards standard messages having several data blocks with
b1) at least one operating data block containing the operating data used in the current operation of the subprocessor, and
b2) a display data block containing the most recent data requested by means of a show instruction,
- with the subprocessor repeatedly transmitting, in the display data block of its upwards standard message, a last set of data requested by a downwards standard message until new data is requested.

2. Method according to Claim 1 or 2,
**characterised in that** before step a) on start up at least one initialisation message is sent from the master processor to each subprocessor, consisting of several data blocks with at least one application data block, that contains application data relevant for the following operation of the subprocessors, and that each message is preceded by an identification block, preferably also containing the address block, identifying it as an initialisation or standard message.

3. Method according to Claim 1,
**characterised in that** on a system, preferably a multiprocessor system controlling an internal combustion engine, at first a first application data record is specified, with the system control changing the application data of this data record by downwards standard messages and by means of suitable show instructions in downwards standard message requesting current data and initiating its display, in order to optimise the application data record.

4. Method according to one of the preceding claims,
**characterised in that** the show instruction specifies a memory address in the subprocessor at which the requested data is located.

5. Method according to Claim 2,
**characterised in that** during start-up the subprocessor checks that it has received all the application data with at least one initialisation message and only then responds with an upwards standard message.

6. Method according to one of the preceding claims,
**characterised in that** a check block is attached to each message that enables the message to be checked for transmission errors, and that the subprocessor rejects an incorrect message on receipt and continues with the processing of the application data already present until a valid message with new application data is again received.

## Revendications

1. Procédé d'échange de données pour un système multiprocesseur qui présente un processeur maître et au moins un processeur esclave qui réalise une tâche de régulation dans un équipement, le processeur maître et le processeur esclave communicant entre eux par un bus de système et une interface d'échange de données étant prévue dans le processeur maître pour échanger des données avec un système externe, procédé selon lequel
a) des messages standard descendants répétitifs sont envoyés du processeur maître vers le processeur esclave sur le bus de système,
b) à chaque message standard descendant, le processeur esclave répond par un message standard montant du processeur esclave vers le processeur maître,
- les messages standard descendants présentent plusieurs blocs de données avec au moins
a1) un bloc d'adresse qui identifie le processeur esclave auquel il est adressé,
a2) un bloc de comptage qui désigne le numéro d'un bloc de données d'application qui suit dans le message standard descendant,
a3) au moins un bloc de données de fonctionnement qui contient les données de fonctionnement prédéfinies pour le fonctionnement actuel du processeur esclave, et
a4) au moins un bloc de données d'application qui contient les données d'application importantes pour le fonctionnement global du processeur esclave, une instruction d'interrogation d'une donnée actuellement présente dans le processeur esclave pouvant également être émise comme donnée d'application, et
- les messages standard montants présentent plusieurs blocs de données avec
b1) au moins un bloc de données de fonctionnement qui contient les données de fonctionnement utilisées pour le fonctionnement actuel du processeur esclave, et
b2) un bloc de données d'indication qui contient la dernière donnée interrogée avec une instruction d'interrogation,
- le processeur esclave transmettant de manière répétitive dans le bloc de données d'indication de son message standard montant une donnée interrogée en demier avec un message standard descendant jusqu'à ce qu'une nouvelle donnée soit interrogée.

2. Procédé selon la revendication 1, **caractérisé en ce qu'**avant l'étape a) au moins un message d'initialisation est envoyé par le processeur maître à tous les processeurs esclave, lequel message se compose de plusieurs blocs de données dont au moins un bloc de données d'application qui contient les données d'application importantes pour le fonctionnement suivant des processeurs esclaves et que chaque message est précédé d'un bloc d'identification qui l'identifie en tant que message d'initialisation ou standard, lequel contient de préférence également le bloc d'adresse.

3. Procédé selon la revendication 1 ou 2, **caractérisé en ce que** dans le cas d'un système multiprocesseur qui commande un équipement, plus particulièrement un moteur à combustion interne, un premier jeu de données d'application est tout d'abord prédéfini, les données d'application de ce jeu de données sont modifiées par des messages standard descendants pendant la commande de l'équipement et des instructions d'interrogation appropriées dans les messages standard descendants provoquent l'interrogation des données actuelles et demandent leur affichage afin d'optimiser le jeu de données d'application.

4. Procédé selon l'une des revendications précédentes, **caractérisé en ce que** l'instruction d'interrogation indique une adresse de mémoire dans le processeur esclave où se trouve la donnée interrogée.

5. Procédé selon la revendication 2, **caractérisé en ce que** le processeur esclave vérifie pendant la mise en service s'il a obtenu toutes les données d'application avec l'au moins un message d'initialisation et après seulement répond avec un message standard montant.

6. Procédé selon l'une des revendications précédentes, **caractérisé en ce qu'**à chaque message vient se raccorder un bloc de contrôle qui permet de vérifier si le message contient des erreurs de transmission et que le processeur esclave, lors de la réception d'un message erroné, rejette celui-ci et continue de fonctionner avec les données d'application actuellement présentes jusqu'à recevoir de nouveau un message valide avec de nouvelles données d'application.
